# EUROPEAN PATENT SPECIFICATION

(11) **EP 3 621 344 B1**
(45) Date of publication and mention of the grant of the patent: **14.01.2026**
(21) Application number: 17908753.1
(22) Date of filing: 02.05.2017
(51) Int. Cl.: H04L 1/16, H04W 28/04, H04W 28/06

(54) **USER TERMINAL, AND WIRELESS COMMUNICATION METHOD**
BENUTZERENDGERÄT UND DRAHTLOSKOMMUNIKATIONSVERFAHREN
TERMINAL UTILISATEUR ET PROCÉDÉ DE COMMUNICATION SANS FIL

(43) Date of publication of application: 11.03.2020
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2017/017304
(87) International publication number: WO 2018/203405

(56) References cited:
- WO-A1-2010/109521
- MEDIATEK INC: "Considerations on CB grouping for multiple HARQ ACK/NACK bits per", vol. RAN WG1, no. Spokane, USA; 20170403 - 20170407, 2 April 2017 (2017-04-02), XP051242607, Retrieved from the Internet <URL:http://www.3gpp.org/ftp/Meetings_3GPP_SYNC/RAN1/Docs/> [retrieved on 20170402]
- MOTOROLA: "Number of HARQ Channels", 3GPP TSG-RAN WG1 #46B R1-062597, 4 October 2006 (2006-10-04), XP050596158
- ITRI: "Synchronization Sequence Design Considerations and Evaluation for New Radio", 3GPP TSG-RAN WG1 #89 R1- 1708384, 6 May 2017 (2017-05-06), XP051261421

## Description

### Technical Field

The present invention relates to a user terminal and a radio communication method in next-generation mobile communication systems.

### Background Art

In the UMTS (Universal Mobile Telecommunications System) network, the specifications of long-term evolution (LTE) have been drafted for the purpose of further increasing high speed data rates, providing lower latency and so on (see non-patent literature 1). Also, the specifications of LTE-A (also referred to as "LTE-Advanced," "LTE Rel. 10 to 13," etc.) have been drafted for further broadbandization and increased speed beyond LTE (also referred to as "LTE Rel. 8 or 9"), and successor systems of LTE (also referred to as, for example, "FRA (Future Radio Access)," "5G (5th Generation mobile communication system)," "NR (New RAT (Radio Access Technology)," "LTE Rel. 14 and later versions," etc.) are under study.

In existing LTE systems (for example, Rel. 13 and earlier versions), adaptive modulation and coding (AMC), in which at least one of the modulation schemes, the transport block size (TBS), and the coding rate is changed adaptively, is executed for link adaptation. Here, TBS refers to the size of transport blocks (TBs), which are units of information bit sequences. One or more TBs are assigned to 1 subframe.

Also, in existing LTE systems, when TBS exceeds a predetermined threshold (for example, 6144 bits), a TB is divided into one or more segments (code blocks (CBs)), and, coding is done on a per segment basis (code block segmentation). Each encoded code block is concatenated and transmitted.

Also, in existing LTE systems, retransmission (HARQ (Hybrid Automatic Repeat reQuest)) of DL signals and/or UL signals is controlled in TB units. To be more specific, in existing LTE systems, even when a TB is segmented into a plurality of CBs, retransmission control information (which is also referred to as "ACK (ACKnowledgment)" or "NACK (Negative ACK)" (hereinafter abbreviated as "A/N") and which is also referred to as "HARQ-ACK" and the like) is transmitted in TB units.
MEDIATEK INC, "Considerations on CB grouping for multiple HARQ ACK/NACK bits per", vol. RAN WG1, no. Spokane, USA; 20170403 - 20170407, (20170402), 3GPP DRAFT; R1-1704463 CONSIDERATIONS ON CB GROUPING FOR MULTIPLE HARQ AN BITS PER TB_FINAL, 3RD GENERATION PARTNERSHIP PROJECT (3GPP), MOBILE COMPETENCE CENTRE ; 650, ROUTE DES LUCIOLES ; F-06921 SOP, URL: http://www.3gpp.org/ftp/Meetings_3GPP_SYNC/RAN1/Docs/, (20170402), considers CB grouping and selecting CBG granularity and CBG number, when supporting more than one HARQ-ACK bits per TB, noting that the particular choice of CBG granularity and CBG number may have an impact on the overall transmission efficiency and the HARQ-ACK feedback size. Here, a maximum number of CBGs (Nmax) is taken into account, and Nmax is a function of the number of CBs in a TB.

### Citation List

### Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall Description; Stage 2 (Release 8)," April, 2010

### Summary of Invention

Determination of the allocation of code blocks of a transport block into code block groups, based on a maximum number of code block groups, as set forth in the in independent claims 1,4,5 and 6.

### Brief Description of Drawings

FIG. 1 is a diagram to show examples of transmission processes where code block segmentation is employed;
FIG. 2 is a diagram to show examples of receiving processes where code block segmentation is employed;
FIG. 3 is a diagram to show an example of DL retransmission control in an existing LTE system;
FIGs. 4A and 4B are diagrams to show an example of first CBG configurations according to a first example of the present invention;
FIGs. 5A to 5C are diagrams to show other examples of first CBG configurations according to the first example;
FIGs. 6A and 6B are diagrams to show examples of second CBG configurations according to the first example;
FIGs. 7A to 7C are diagrams to show examples of CBG mapping according to the first example;
FIGs. 8A and 8B are diagrams to show first examples of HARQ-ACK feedback according to a second example of the present invention;
FIGs. 9A and 9B are diagrams to show second examples of HARQ-ACK feedback according to the second example;
FIG. 10 is a diagram to show a third example of HARQ-ACK feedback according to the second example;
FIG. 11 is a diagram to show an exemplary schematic structure of a radio communication system according to the present embodiment;
FIG. 12 is a diagram to show an exemplary overall structure of a radio base station according to the present embodiment;
FIG. 13 is a diagram to show an exemplary functional structure of a radio base station according to the present embodiment;
FIG. 14 is a diagram to show an exemplary overall structure of a user terminal according to the present embodiment;
FIG. 15 is a diagram to show an exemplary functional structure of a user terminal according to the present embodiment; and
FIG. 16 is a diagram to show an exemplary hardware structure of a radio base station and a user terminal according to the present embodiment.

### Description of Embodiments

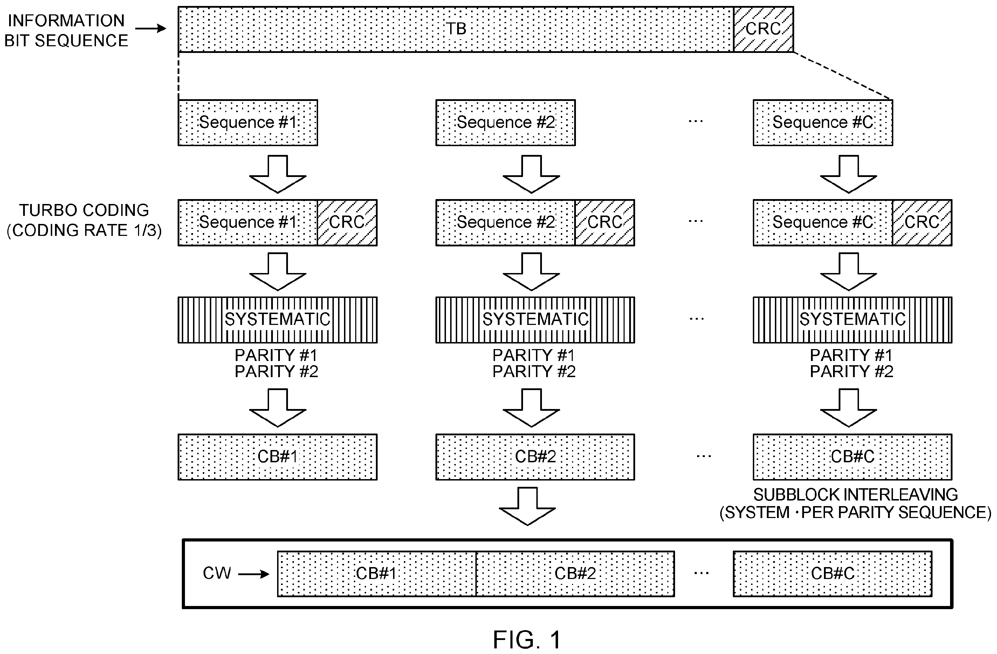

FIG. 1 is a diagram to show an example of transmission process where code block segmentation is employed. Assuming that a transport block (hereinafter abbreviated as a "TB"), to which CRC (Cyclic Redundancy Check) bits are appended (that is, an information bit sequence including CRC bits), exceeds a predetermined threshold (for example, 6144 bits or 8192 bits), "code block segmentation" refers to dividing this TB into a plurality of segments. Code block segmentation is executed, for example, to adjust the TBS to a size that is compatible with the encoder, and the above predetermined threshold may be equal to the maximum size that is compatible with the encoder.

As shown in FIG. 1, when the TB size (TBS) exceeds a predetermined threshold (for example, 6144 bits or 8192 bits, etc.), this information bit sequence, including CRC bits, is divided (segmented) into a plurality of segments on the transmitting side. Note that filler bits may be appended to the top of segment #1.

As shown in FIG. 1, each segment is appended CRC bits (for example, 24 bits), and subjected to channel coding (for example, turbo coding, low-density parity-check (LDPC) coding, etc.) at a predetermined coding rate (for example, 1/3, 1/4, 1/8, etc.). By means of this channel coding, systematic bits and parity bits (for example, first and second parity bits (#1 and #2)) are generated as code bits of each code block (hereinafter abbreviated as "CB").

Each CB is interleaved in a predetermined manner, has a bit sequence of an amount to match the amount of scheduled resources selected, and is transmitted. For example, the systematic bit sequence, the first parity bit sequence and the second parity bit sequence are all interleaved individually (subblock interleaving). After this, the systematic bit sequence, the first parity bit sequence and the second parity bit sequence are each input to a buffer (circular buffer), and, based on the number of REs that are available in allocated resource blocks, the redundancy version (RV) and so on, the code bits for each CB are selected from the buffer (rate matching). Interleaving may be applied between multiple CBs as well.

Each CB, formed with selected code bits, is concatenated to form a codeword (CW). The codeword is subjected to scrambling, data modulation and so on, and then transmitted.

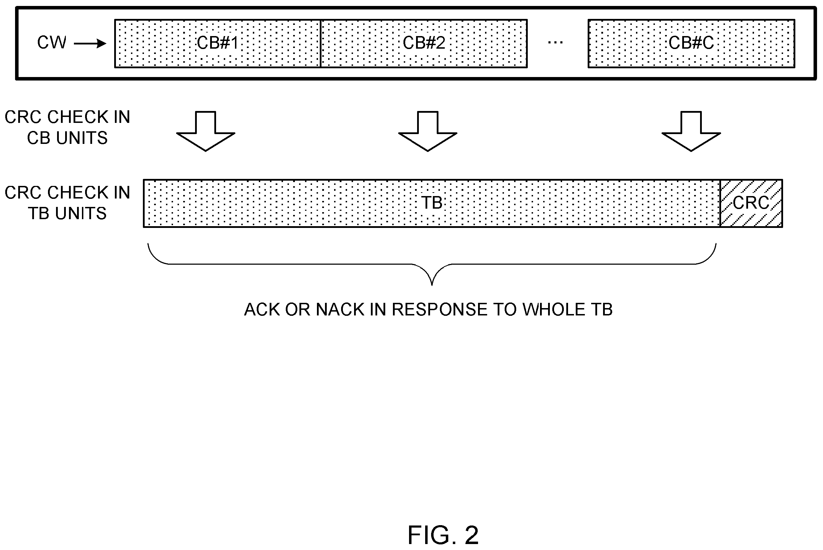

FIG. 2 is a diagram to show examples of receiving processes where code block segmentation is employed. On the receiving side, the TBS is determined based on the TBS index and the number of resource blocks allocated (for example, PRBs (Physical Resource Blocks)), and, based on the TBS, the number of CBs is determined.

As shown in FIG. 2, on the receiving side, each CB is decoded, and error detection of each CB is performed using the CRC bits appended to each CB. Also, code block segmentation is undone, so as to recover the TB. Furthermore, error detection of the whole TB is performed using the CRC bits appended to the TB.

On the receiving side in existing LTE systems, retransmission control information (which is also referred to as "ACK" or "NACK," and which hereinafter will be abbreviated as "A/N" or referred to as "HARQ-ACK") in response to the whole of the TB is transmitted to the transmitting side, based on the error detection result of the whole TB. On the transmitting side, the whole TB is retransmitted in response to a NACK from the receiving side.

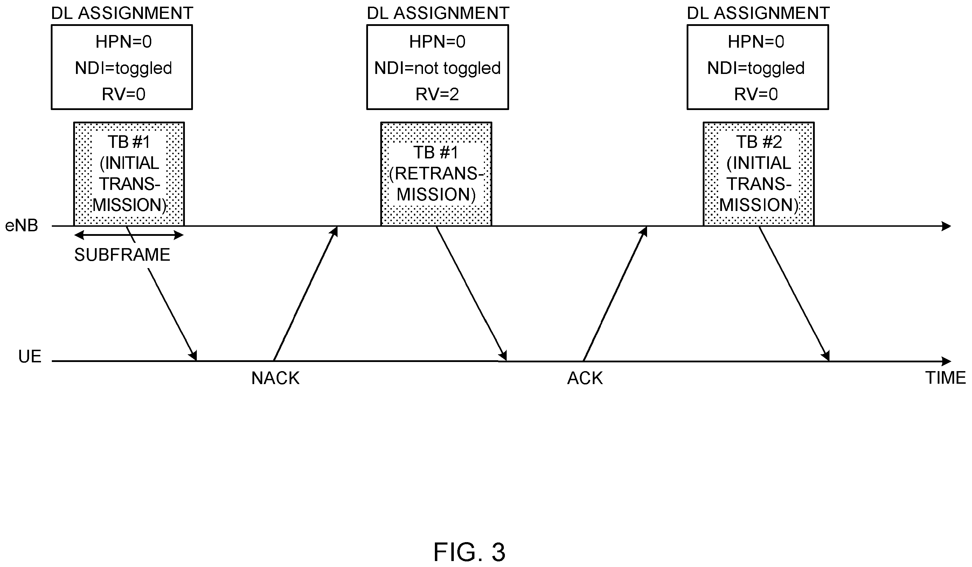

FIG. 3 is a diagram to show an example of retransmission control for DL signals in an existing LTE system. In existing LTE systems, retransmission is controlled on a per TB basis, irrespective of whether or not a TB is divided into a plurality of CBs. To be more specific, HARQ processes are assigned on a per TB basis. Here, HARQ processes are the processing unit of in retransmission control, and every HARQ process is identified by an HARQ process number (HPN). One or more HARQ processes are configured in a user terminal (UE (User Equipment)), and, in the HARQ process of the same HPN, the same data keeps being retransmitted until an ACK is received.

For example, referring to FIG. 3, HPN=0 is assigned to TB #1 for new (initial) transmission. Upon receiving a NACK, the radio base station (eNB (eNodeB)) retransmits same TB #1 in HPN=0, and, upon receiving an ACK, the radio base station transmits next TB #2, for the first time, in HPN=0.

Also, the radio base station can include the above HPN, a new data indicator (NDI) and a redundancy version (RV) in downlink control information (DCI) (DL assignment) that allocates the DL signal (for example, a PDSCH) for transmitting TBs.

Here, the NDI is an indicator to distinguish between initial transmission and retransmission. For example, the NDI indicates retransmission if the NDI is not toggled in the same HPN (has the same value as the previous one), and indicates initial transmission if the NDI is toggled (has a different value from the previous one).

In addition, the RV indicates the difference in the redundancy of transmission data. The values of RVs include, for example, 0, 1, 2 and 3, where 0 indicates the lowest degree of redundancy and is used for initial transmission. By applying a different RV value to every transmission with the same HPN, HARQ gain can be achieved in an effective manner.

For example, in FIG. 3, the DCI in TB #1 of initial transmission contains the HPN "0," a toggled NDI, and the RV value "0." Therefore, the user terminal can recognize that the HPN "0" indicates initial transmission, and decode TB #1 based on the RV value "0." On the other hand, the DCI in the retransmission of TB #1 includes the HPN "0," an untoggled NDI, and the RV value "2." Therefore, the user terminal can recognize that the HPN "0" indicates retransmission, and decode TB #1 based on the RV value "2." The initial transmission of TB #2 is the same as the initial transmission of TB #1.

As described above, in existing LTE systems, retransmission is controlled on a per TB basis, regardless of whether or not code block segmentation is employed. For this reason, when code block segmentation is employed, even if errors concentrate in part of C (C>1) CBs that are formed by dividing a TB, the whole TB is retransmitted.

Therefore, not only CBs in which errors are detected (and which therefore fail to be decoded), but also CBs in which errors are not detected (and which therefore are successfully decoded) have to be retransmitted, and this might cause a decline in performance (throughput). Furthermore, provided that future radio communication systems (for example, 5G, NR, etc.) are anticipated to have increased cases where a TB is segmented into many CBs (for example, several tens of CBs), retransmission in units of TBs might cause an even more significant decline in performance.

Therefore, for future radio communication systems, studies are underway to control retransmission per code block group (CBG) in which one or more CBs are grouped. When retransmission is controlled in units of CBGs, how to form CBGs that each include one or more CBs in a TB is the problem. So, the present inventors have worked on a method of forming CBGs that each include one or more CBs within a TB (first example), and a method of sending retransmission control information, as feedback, on a per CBG basis (second example), and arrived at the present invention.

Now, embodiments of the present invention will be described below in detail with reference to the accompanying drawings. Note that, in the following description, the method of forming CBGs, which will be described with the first example, can be applied to both DL and UL. Also, the feedback method of sending retransmission control information as feedback, which will be described with the second example, will primarily focus on feedback of retransmission control information in response to DL data, but is suitable for use for sending retransmission control information for feedback of the in response to UL data.

### (First Example)

In the first example, the method of forming CBGs will be described. In the first example, a user terminal may determine one or more CBs to form each CBG, based on the number of CBGs per TB (first CBG configuration). Alternatively, the user terminal may determine one or more CBs to form each CBG based on the number of CBGs per CBG (second CBG configuration).

### <First CBG Configuration>

In the event the first CBG configuration is used, the number of CBGs per TB is configured in a user terminal by higher layer signaling.

To be more specific, through higher layer signaling, a user terminal receives information to indicate the number of CBGs (the quantity of CBGs) per TB (CBG quantity information). Note that the CBG quantity information may show the maximum number of CBGs per TB.

The user terminal determines the TBS based on indication information included in DCI. This indication information may show at least one of the number of layers, the MCS (Modulation and Coding Scheme) index, the PRBs allocated to the PDSCH, and the number of symbols allocated to the PDSCH. Here, the MCS index is associated with the modulation order of the PDSCH and the TBS index.

Based on the TBS that is determined, the user terminal determines the number of CBs and the size of each CB in the TB. Based on the determined number of CBs in the TB and the maximum number of CBGs per TB configured by higher layer signaling, the user terminal groups one or more CBs in the TB. To be more specific, the user terminal may switch the way of forming CBGs depending on whether or not the number of CBGs in the TB is greater than or equal to the maximum number of CBGs per TB.

### «When the number of CBs in a TB is greater than or equal to the maximum number of CBGs per TB»

When the number of CBs in a TB is greater than or equal to the above maximum number of CBGs per TB, the user terminal may form each CBG, with one or more CBs that are selected cyclically from all of the CBs in the TB. Alternatively, the user terminal may form each CBG with a predetermined number n (n≥1) of sequential CBs in the TB.

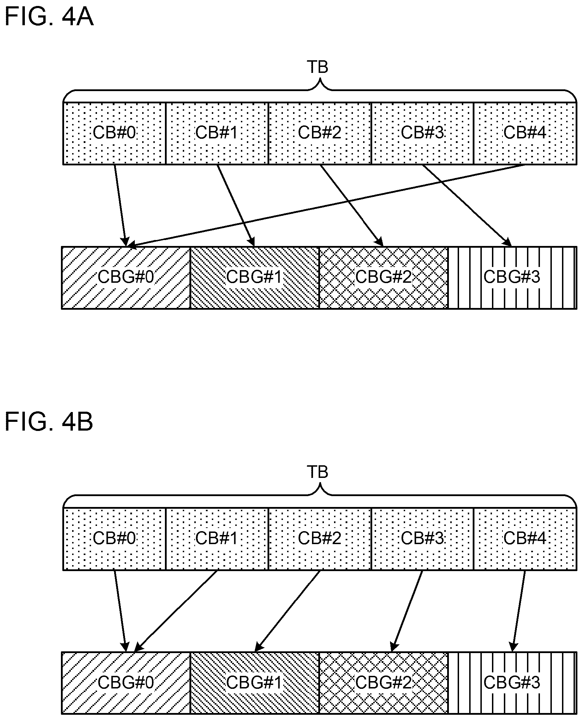

FIGs. 4 are diagrams to show examples of first CBG configurations according to the first example. In FIGs. 4A and 4B, 1 TB is formed with 5 CBs, and the maximum number of CBGs per TB is configured to 4. That is, FIGs. 4A and 4B assume cases where the number of CBs in 1 TB is 5, and greater than the maximum number of CBGs per TB, which is 4.

When, as shown in FIG. 4A, a TB is formed with 5 CBs #0 to #4, and 4 CBGs #0 to #3 are configured per TB, CBGs #0 to #3 may be each formed with CBs that are cyclically selected out of CBs #0 to #4. For example, referring to FIG. 4A, CBs #0, #1, #2 and #3 are classified into CBGs #0, #1, #2 and #3, respectively, and CB #4 is classified into first CBG #0. In FIG. 4A, the CBs that form CBGs #0 to #3, respectively, are cyclically selected from all of CBs #0 to #4 in the TB, so that the difference in the number of CBs between CBGs can be minimized.

Alternatively, when, as shown in FIG. 4B, a TB is formed with 5 CBs #0 to #4 and 4 CBGs #0 to #3 are configured per TB, CBGs #0 to #3 may be each formed with a predetermined number of sequential CBs. Here, the predetermined number of sequential CBs may be determined based on the number of CBs per TB, N, and the maximum number of CBGs per TB, M.

For example, the number of sequential CBs that form a given CBG, n, may be determined based on n=floor (N/M). In this case, (N-n·M) CBGs may be formed with n+1 sequential CBs, and M-(N-n·M) CBGs may be formed with n sequential CBs. For example, in FIG. 4B, n=floor (5/4)=1, and 1 (=N-n·M=5-1·4) CBG #0 is formed with 2 (=n+1) sequential CBs #0 and #1. 3 (=M-(N-n·M)=4-1) CBGs #1, #2 and #3 are each formed with 1 (=n) CB, namely CBs #1, #2 and #3, respectively.

In FIG. 4B, a predetermined number of sequential CBs are determined from all of CBs #0 to #4 in the TB according to predetermined rules, so that the difference in the number of CBs between CBG can be minimized. Note that, in FIG. 4B, CBG #0 at the top is the CBG to be formed with n+1 CBs, but this is by no means limiting. (N-n·M) CBGs from the top, (N-n·M) CBGs from the end, or CBGs that are determined based on predetermined rules may be formed with n+1 CBs.

### «When the number of CBs in a TB is less than the maximum number of CBGs per TB»

To be more specific, if the number of CBs in a TB is less than the maximum number of CBGs per TB, the user terminal may form a single CBG with all the CBs in the TB. Alternatively, the user terminal may form varying CBGs with all the CBs in the TB. Alternatively, the user terminal may form each CBG as a single CB, by repeating at least 1 CB in the TB.

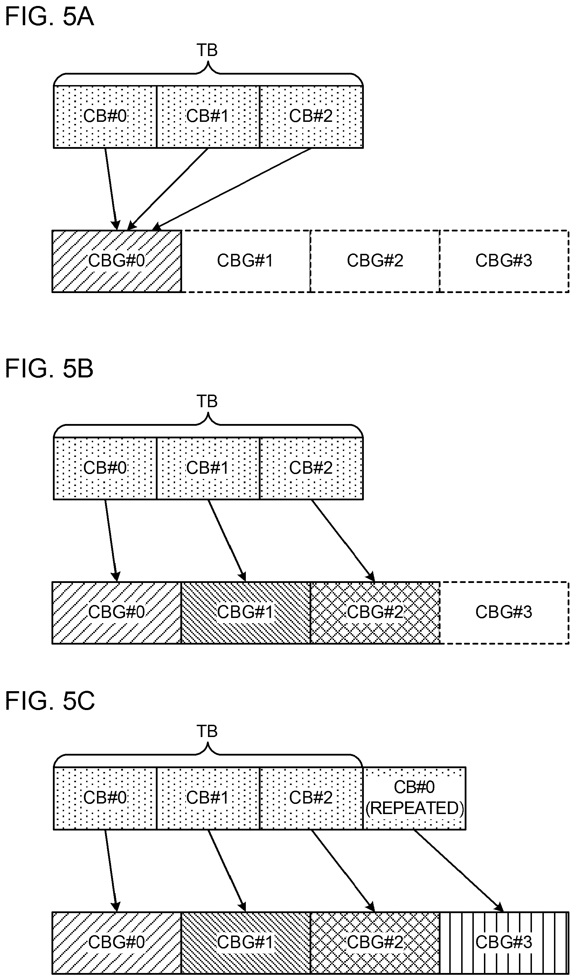

FIGs. 5 are diagrams to show other examples of first CBG configurations according to the first example. In FIGs. 5A to 5C, 1 TB is formed with 3 CBs, and the maximum number of CBGs per TB is configured to 4. That is, FIGs. 5A to 5C assume cases where the number of CBs in 1 TB is 3, and less than the maximum number of CBGs per TB, which is 4.

When, as shown in FIG. 5A, a TB is formed with 3 CBs #0 to #2 and 4 CBGs #0 to #3 are configured per TB, CBs #0 to #2 may form a single CBG #0. For example, in FIG. 5A, the number of CBGs per TB is configured to 4, but only 1 CBG #0 is formed, and 3 CBGs #1 to #3 are not formed.

As shown in FIG. 5A, when a TB contains a single CBG, it is possible to think that the TB and the CBG are equal, so that retransmission may be controlled in units of TBs (fallback from retransmission in CBG units to retransmission in TB units may be possible). In this way, the number of HARQ-ACK bits can be reduced.

When, as shown in FIG. 5B, a TB is formed with 3 CBs #0 to #2 and 4 CBGs #0 to #3 are configured per TB, CBs #0 to #2 may form varying CBGs #0 to #2, respectively. For example, in FIG. 5B, the number of CBGs per TB is configured to 4, but only 3 CBGs #0 to #2 are formed, and 1 CBG #3 is not formed.

As shown in FIG. 5B, if every CBG contains a single CB, it is possible to think that the CBG and the CB are equal, so that it is possible to control retransmission in units of CBs, based on retransmission control in units of CBGs. Consequently, it is possible to retransmit only CBs in which errors are detected, and prevent the decline in performance due to retransmission of CBs in which no error is detected (and which are therefore successfully decoded) can be prevented.

Alternatively, as shown in FIG. 5C, CBGs #0 to #3 may be each formed with a single CB, by repeating at least 1 CB (here, CB #0). To be more specific, at least 1 CB may be repeated until the total number of CBs becomes equal to the maximum number of CBGs per TB, which is configured by higher layer signaling. For example, in FIG. 5C, the TB is formed with 3 CBs #0 to #2, so that 1 CB (here, CB #0) is repeated until reaching the maximum number of CBGs per TB.

As shown in FIG. 5C, when at least 1 CB is repeated until the number of CBs per TB is equal to the maximum number of CBGs per TB, it is possible to prevent a mismatch between the maximum number of CBGs and the number of CBGs actually included in a TB.

As described above, according to the first CBG configuration, one or more CBs that form every CBG are determined based on the maximum number of CBGs per TB, which is configured by higher layer signaling, so that each CBG can be formed properly.

### <Second CBG Configuration>

In the event a second CBG configuration is used, the number of CBs per CBG is configured in a user terminal by higher layer signaling.

To be more specific, through higher layer signaling, a user terminal receives information to indicate the number of CBs (the quantity of CBs) per CBG (CB quantity information). Note that the CB quantity information may show the maximum number of CBs per CBG.

The user terminal determines the TBS based on indication information included in DCI. This indication information may show at least one of the number of layers, the MCS index, the PRBs allocated to the PDSCH, and the number of symbols allocated to the PDSCH. Here, the MCS index may be associated with the modulation order of the PDSCH and the TBS index.

Based on the TBS that is determined, the user terminal determines the number of CBs and the size of each CB in the TB. Based on the determined number of CBs in the TB and the maximum number of CBs per CBG configured by higher layer signaling, the user terminal groups one or more CBs in the TB. To be more specific, the user terminal may switch the way of forming CBGs depending on whether or not the number of CBGs in the TB is greater than or equal to the maximum number of CBs per CBG.

### «When the number of CBs in a TB is greater than or equal to the maximum number of CBs per CBG»

When the number of CBs in a TB is greater than or equal to the above maximum number of CBGs per TB, the user terminal may form one or more CBGs with a number of CBs to match the above maximum number of CBs, and form other CBGs with the rest of the CBs. Alternatively, the user terminal may form each CBG so as to minimize the difference in the number of CBs between CBGs.

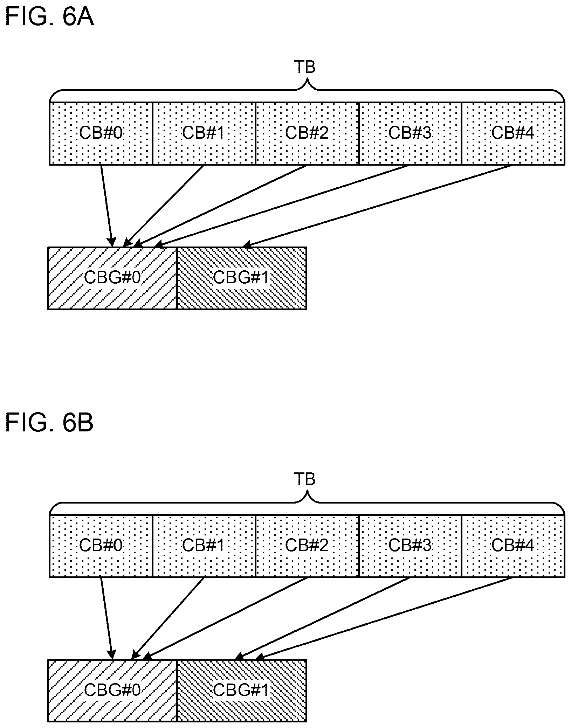

FIGs. 6 are diagrams to show examples of second CBG configurations according to the first example. In FIGs. 6A and 6B, 1 TB is formed with 5 CBs, and the maximum number of CBs per CBG is configured to 4. That is, FIGs. 6A and 6B assume cases where the number of CBs in 1 TB is 5, and greater than or equal to the maximum number of CBs per CBG, which is 4.

When, as shown in FIG. 6A, a TB is formed with 5 CBs #0 to #4, and the maximum number of CBs per CBG is configured to 4, CBG #0 may be formed with 4 CBs #0 to #3, corresponding to the maximum number of CBs configured by higher layer signaling, and CBG #1 may be formed with the remaining 1 CB, namely CB #4.

When, as shown in FIG. 6A, CBG #0 is formed with 4 CBs, and CBG #1 is formed with 1 CB, the difference in the number of CBs between the CBGs is large, and there is a danger that the error rate varies significantly between the CBGs. Therefore, in order to equalize the error rate between CBGs, as shown in FIG. 6B, each CBG may be formed so as to minimize the difference in the number of CBs between CBGs. For example, in FIG. 6B, CBG #0 is formed with 3 CBs #0 to #2, and CBG #1 is formed with 2 CBs #3 and #4.

### «When the number of CBs in a TB is less than the maximum number of CBs per CBG»

To be more specific, if the number of CBs in a TB is less than the maximum number of CBs per CBG, the user terminal may form a single CBG with all the CBs in the TB. Alternatively, the user terminal may form varying CBGs with all the CBs in the TB.

As described above, according to the second CBG configuration, one or more CBs that form every CBG are determined based on the maximum number of CBs per CBG, which is configured by higher layer signaling, so that each CBG can be formed properly.

### <Mapping to Time/Frequency Resources>

Next, in accordance with the above description of the first and/or the second CBG configuration, how CBGs formed with one or more CBs are mapped to time resources and/or frequency resources (time/frequency resources) will be described.

One or a larger integer number of CBs may be mapped per symbol (or 1 CB may be mapped so as not to span multiple symbols). In this way, on the receiving side, pipeline processing per symbol becomes possible, so that the time required until HARQ-ACK feedback is sent (also referred to as "processing time," "latency time" or "processing latency," etc.) can be shortened.

In addition, by mapping one or a larger integer number of CBs per symbol, when interruption (preemption or puncturing) by other communication occurs in some symbols, indication information about this interruption (preemption indication or puncturing indication) can be reported adequately to the user terminal. The preemption indication may be an indication that reports to the user terminal that there has been an interruption in at least one of the resources punctured by preemption, CBs, and CBGs. Based on this report, the user terminal exerts control so that the impact of these punctured resources, CBs and/or CBGs is reduced during decoding (for example, by replacing the log likelihood ratios (LLRs) of decoder inputs with zeros).

Also, each CBG may be mapped to time/frequency resources in the time direction and in the frequency direction, in order ("time-first, frequency-second"). Also, each CBG may be mapped to time/frequency resources in the frequency direction and in the time direction, in order ("frequency-first, time-second"). Alternatively, interleaving in the frequency and/or the time direction may be applied to the mapping of CBGs to time/frequency resources (also referred to as "third mapping," "staggered mapping," etc.).

Information that specifies whether each CBG is mapped in the order of the time direction and the frequency direction ("time-first, frequency-second") as described above, or each CBG is mapped in the order of the frequency direction and the time direction ("frequency-first, time-second") as described above may be reported (configured) to the user terminal by higher layer signaling. Information to indicate whether interleaving is performed in the frequency direction and/or in the time direction may be also reported to (configured in) the user terminal via higher layer signaling.

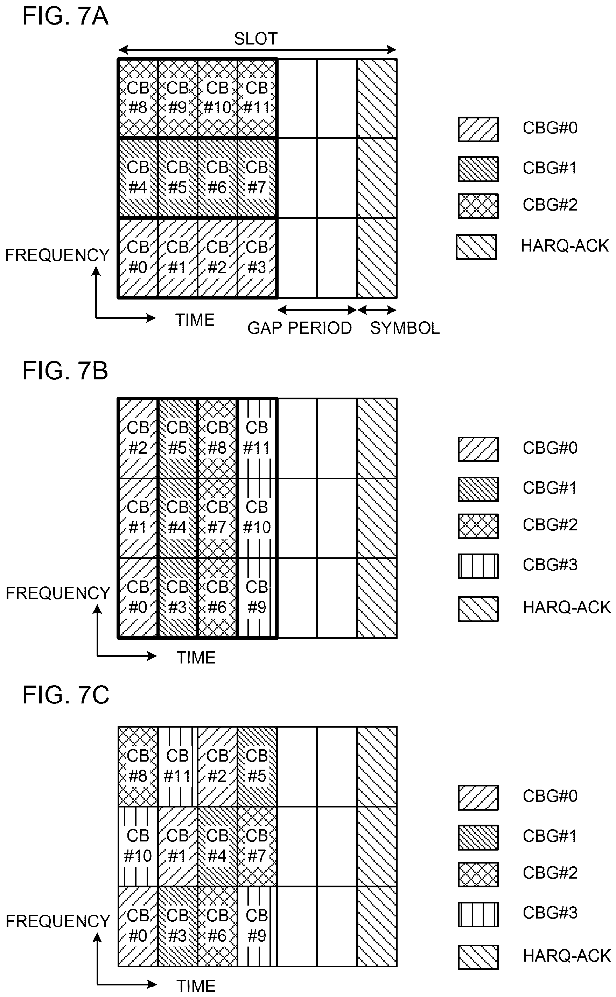

FIGs. 7 are diagrams to show examples of CBG mapping according to the first example. Note that, in FIGs. 7A to 7C, 1 TB is formed with 12 CBs. Also, FIG. 7A shows 3 CBGs #0 to #2, each formed with 4 CBs based on the method described with the first or the second CBG configuration. Also, FIGs. 7B and 7C show 4 CBGs #0 to #3, each formed with 3 CBs based on the method described with the first or the second CBG configuration.

FIG. 7A shows an example of mapping in the time direction and in the frequency direction, in order ("time-first, frequency-second"). For example, in FIG. 7A, CBs #0 to #3, #4 to #7, and #8 to #11, which form CBGs #0, #1 and #2, respectively, are mapped to different symbols of the same frequency resource (for example, a predetermined number of subcarriers and/or PRBs).

In the case shown in FIG. 7A, the user terminal can perform receiving processes (for example, at least one of receipt, demodulation and error detection (decoding)) for each of CBGs #0 to #2, in parallel, and determine which of an ACK or a NACK to send as feedback in response to each of CBGs #0 to #2, at substantially the same timing.

FIG. B shows an example of mapping in the frequency direction and in the time direction, in order ("frequency-first, time-second"). For example, in FIG. 7B, CBs #0 to #2, #3 to #5, #6 to #8 and #9 to #11, which form CBGs #0, #1, #2 and 3, respectively, are mapped to different frequency resources (for example, a predetermined number of subcarriers and/or PRBs) of the same symbol.

Referring to the case shown in FIG. 7B, the user terminal can perform demodulation and/or error detection for the CBGs received in the previous symbol, and, in parallel with this, receive CBGs in the following symbol (pipeline processing for each CBG (or for each symbol)). Therefore, the user terminal can decide whether to send ACKs or NACKs as feedback, in response to these CBGs, in the order in which these CBGs are received.

FIG. 7C shows an example, in which multiple CBs to form each CBG are mapped to varying frequency resources in varying symbols. For example, in FIG. 7C, interleaving is executed in the time direction, among a plurality of CBs that form CBGs #0 to #3 of FIG. 7B, respectively. In the case shown in FIG. 7C, a time diversity effect and a frequency diversity effect can be gained for each CBG.

Note that interleaving in the time direction may be deactivated when pipeline processing per symbol is performed. Also, interleaving in the time direction may be activated by extending the processing time of pipeline processing (processing timeline) based on the range of interleaving in the time direction. The processing time for pipeline processing may be extended to the time for processing 1 TB (for example, 4 symbols in FIG. 7C) or extended to the time for processing one or more CBGs (for example, 3 symbols in FIG. 7C).

Also, interleaving in the frequency direction may be deactivated in any of the case where the bandwidth to be allocated is smaller than a predetermined bandwidth, the case where the DFT-spread OFDM waveform is applied, and the case where there is no more than 1 CB per symbol. Also, if the bandwidth allocated is greater than or equal to a predetermined bandwidth, interleaving in the frequency direction may be activated.

Note that, in the first example, the user terminal receiving a TB in the DL decodes the CBs in the TB. The user terminal performs error detection using the CRC bits appended to each CB, and learns whether each CB is properly decoded or not. Furthermore, error detection of the whole TB is performed using the CRC bits appended to the TB.

Furthermore, according to the first example, in the UL, the user terminal appends CRC bits to a TB, and divides the TB into one or more CBs, based on the size of the TB. The user terminal appends CRC bits to each CB, and encodes each CB.

As described above, in the first example, CBGs that each include one or more CBs can be formed properly.

### (Second Example)

Now, with a second example of the present invention, feedback of retransmission control information, which represents ACKs or NACKs (also referred to as "HARQ-ACK bits," "A/N bits," "A/N codebook" and the like) in response to each CBG formed as described in the first example, will be described.

Note that this retransmission control information may be included in uplink control information (UCI), and the UCI may contain, in addition to this retransmission control information, at least one of a scheduling request (SR), channel state information (CSI), and beam index information (BI). Furthermore, although, in the following description, initial transmission will be performed based on TBs, initial transmission may be performed based on CBGs as well.

According to the second example, a user terminal receives a TB that is transmitted in initial transmission from the radio base station, and transmits HARQ-ACK bits, which represent ACKs or NACKs in response to each CBG in the TB. When at least 1 CBG in the TB is retransmitted from the radio base station, the user terminal may transmit HARQ-ACK bits to represent ACKs or NACKs (retransmission control information) in response to all the CBGs in the TB (first HARQ-ACK feedback).

When at least 1 CBG in the TB is retransmitted from the radio base station, the user terminal may transmit HARQ-ACK bits to represent ACKs or NACKs (retransmission control information) in response to these retransmitted CBGs (second HARQ-ACK feedback).

### <First HARQ-ACK Feedback>

In the event of first HARQ-ACK feedback, when at least 1 CBG in a TB is subject to retransmission, the user terminal determines the number of HARQ-ACK bits (also referred to as "codebook size," "A/N codebook size" and the like) based on the maximum number of CBGs per TB concerned.

To be more specific, when at least 1 CBG in a TB is subject to retransmission (or when part of the CBGs in a TB are subject to retransmission), the user terminal may determine the number of HARQ-ACK bits to be equal to the maximum number of CBGs per TB. Also, when at least 1 CBG in a TB is subject to retransmission (or when part of the CBGs in a TB are subject to retransmission), the HARQ-ACK bits may indicate ACKs or NACKs in response to all the CBGs in the TB.

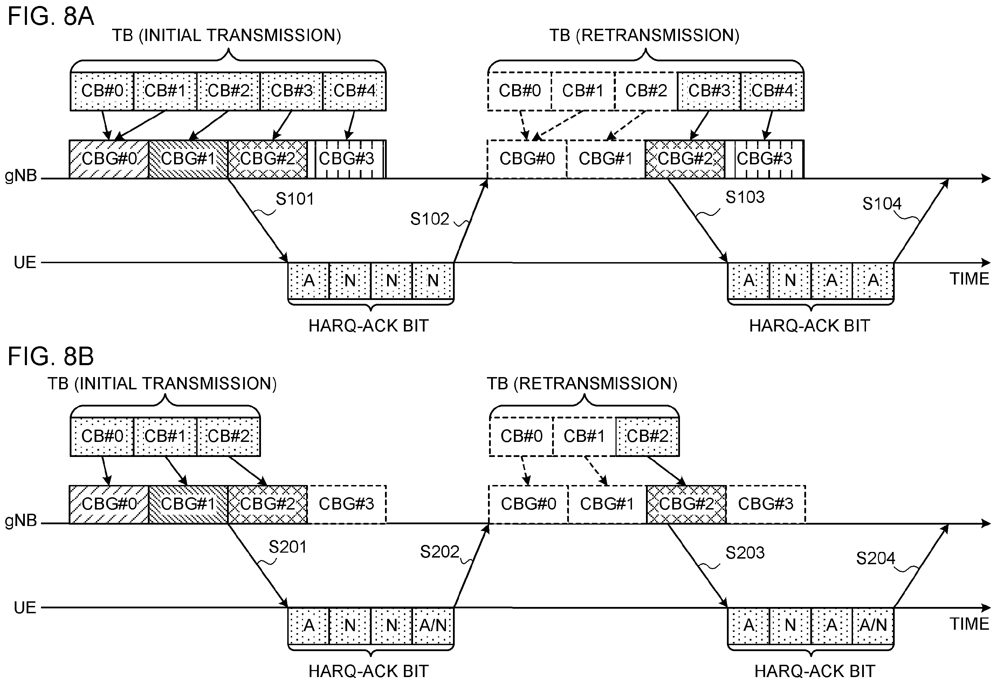

FIGs. 8 are diagrams to show examples of first HARQ-ACK feedback according to the second example. FIG. 8A shows a case where the number of CBs per TB is greater than or equal to the maximum number of CBGs per TB. For example, FIG. 8A assumes that 5 CBs are included in 1 TB, and the maximum number of CBGs per TB is configured to 4. In addition, CBG #0 is formed with 2 CBs #0 and #1, and CBGs #1 to #3 are each formed with 1 CB, namely CBs #2 to #4, respectively (see the first example).

Now, referring to FIG. 8A, a radio base station (gNB) schedules and transmits a TB formed with CBGs #0 to #3 (step S101). To be more specific, the radio base station transmits DCI, which includes scheduling information pertaining to the TB, and transmits this TB via the PDSCH.

The user terminal receives the TB, via the PDSCH, based on the DCI from the radio base station. As explained earlier with the first example, the user terminal determines the TBS for the TB, and, based on the TBS determined this way, determines the number of CBs in the TB (here, 5) and the size of each CB. Based on the number of CBs in this TB, and based on the maximum number of CBGs per TB or the maximum number of CBs per CBG, the user terminal determines the CBs to form CBGs #0 to #3.

The user terminal generates ARQ-ACK bits based on the error detection (decoding) results of one or more CBs forming each CBG, and transmits these HARQ-ACK bits (step S102). In the event of the first HARQ-ACK feedback, the user terminal determines that the number of HARQ-ACK bits is 4 bits, which is equal to the maximum number of CBGs per TB.

For example, referring to FIG. 8A, the user terminal successfully decodes CBs #0 and #1, which form CBG #0, and fails to decode CBs #2, #3, and #4, which form CBGs #1, #2, and #3, respectively. Consequently, the user terminal generates 4 HARQ-ACK bits, representing an ACK in response to CBG #1, and NACKs in response to CBGs #2 to #4. In addition, the user terminal transmits UCI to include these HARQ-ACK bits, via the PUCCH or the PUSCH.

The radio base station retransmits at least 1 CBG in the TB based on the HARQ-ACK bits reported from the user terminal in step S102. For example, in FIG. 8A, the radio base station might mistake the NACK in response to CBG #1 for an ACK (NACK-to-ACK error) and retransmit CBGs #2 and #3 (step S103).

To be more specific, the radio base station transmits DCI that contains scheduling information pertaining to retransmitting CBGs #2 and #3, and transmits these retransmitting CBGs #2 and #3 via the PDSCH. Information about CBGs #2 and #3 that are retransmitted (for example, at least one of the HPNs, NDIs, and CBG indices of retransmitted CBGs #2 and #3) may be included in this DCI.

The user terminal receives retransmitted CBGs #2 and #3 based on the DCI from the radio base station, and decodes retransmitted CBs #3 and #4, which form these retransmitted CBGs #2 and #3, respectively. The user terminal generates and transmits retransmission control information that indicates ACKs or NACKs in response to all of CBGs #0 to #3 in the TB, based on the decoding results of retransmitted CBs #3 and #4 (step S104).

For example, in FIG. 8A, the user terminal successfully decodes retransmitted CBGs #2 and #3 (or their constituent retransmitted CBs #3 and #4). CBGs #0 and #1 are not retransmitted, so that the user terminal generates 4 HARQ-ACK bits, representing an ACK in response to CBG #0, a NACK in response to CBG #1, and ACKs in response to CBGs #2 and #3, based on the decoding results of CBGs #0 and #1 upon initial transmission, and transmits these HARQ-ACK bits. The radio base station can retransmit CBG #1 based on these HARQ-ACK bits.

In this way, referring to FIG. 8A, when at least 1 CBG in a TB is subject to retransmission, not only CBGs that are retransmitted, but also HARQ-ACK bits to represent ACKs/NACKs in response to all of the CBGs in the TB, are reported to the radio base station. Therefore, even when a NACK-to-ACK error occurs with respect to a certain CBG, the radio base station can retransmit this CBG based on subsequent HARQ-ACK bits where a NACK in response to this CBG is indicated.

FIG. 8B shows a case where the number of CBs per TB is less than the maximum number of CBGs per TB. For example, FIG. 8B assumes that 3 CBs are included in 1 TB, and the maximum number of CBGs per TB is configured to 4. CBGs #0 to #2 are each formed with 1 CB, namely CBs #0 to #2, respectively (see the first example). Note that the following description will primarily focus on differences from FIG. 8A.

Now, referring to FIG. 8B, a radio base station (gNB) schedules and transmits a TB formed with CBGs #0 to #2 (step S201). The user terminal determines the TBS for this TB, determines the number of CBs in the TB (here, 3) based on the TBS determined this way, and determines the CBs to form CBGs #0 to #2 based on the number of CBs in this TB, and based on the maximum number of CBGs per TB or the maximum number of CBs per CBG.

The user terminal generates ARQ-ACK bits based on the error detection (decoding) results of one or more CBs forming each CBG, and transmits these HARQ-ACK bits (step S202). For example, referring to FIG. 8B, the user terminal successfully decodes CB #0, which forms CBG #0, and fails to decode CBs #1 and #2, which form CBGs #1 and #2, respectively. In FIG. 8B, the user terminal generates 4 HARQ-ACK bits, representing an ACK in response to CBG #0 and NACKs in response to CBGs #1 and #2.

Here, in FIG. 8B, the number of HARQ-ACK bits is 4 and is greater than the number of CBGs in the TB, which is 3, and CBG #3 is not included in the TB. In FIG. 8B, the fourth bit of the HARQ-ACK bits corresponds to unused CBG #3, and represents either an ACK or a NACK according to predetermined rules.

Note that step S203 and step S204 of FIG. 8B are the same as steps S103 and S104 in FIG. 8A except that the fourth bit of the HARQ-ACK bits corresponding to an unused CBG is configured to a predetermined value.

As described above, according to the first HARQ-ACK feedback, when at least 1 CBG in a TB is subject to retransmission, not only CBGs that are retransmitted, but also HARQ-ACK bits to represent ACKs/NACKs in response to all of the CBGs in the TB, are reported, so that, even when a NACK-to-ACK error occurs in a radio base station with respect to a certain CBG, it is still possible to provide an opportunity for retransmitting this CBG.

### <Second HARQ-ACK Feedback>

Second HARQ-ACK feedback is different from the first HARQ-ACK feedback in that, when at least 1 CBG in a TB is subject to retransmission, a user terminal determines the number of the HARQ-ACK bits based on the number of these retransmitting CBGs, instead of the maximum number of CBGs in the TB. The following description will primarily focus on differences from the first HARQ-ACK feedback.

To be more specific, in the event at least 1 CBG in a TB is subject to retransmission, a user terminal may determine the number of HARQ-ACK bits to be equal to the number of CBGs to be retransmitted. Also, when at least 1 CBG in a TB is subject to retransmission, the HARQ-ACK bits may indicate ACKs or NACKs in response to these retransmitting CBGs.

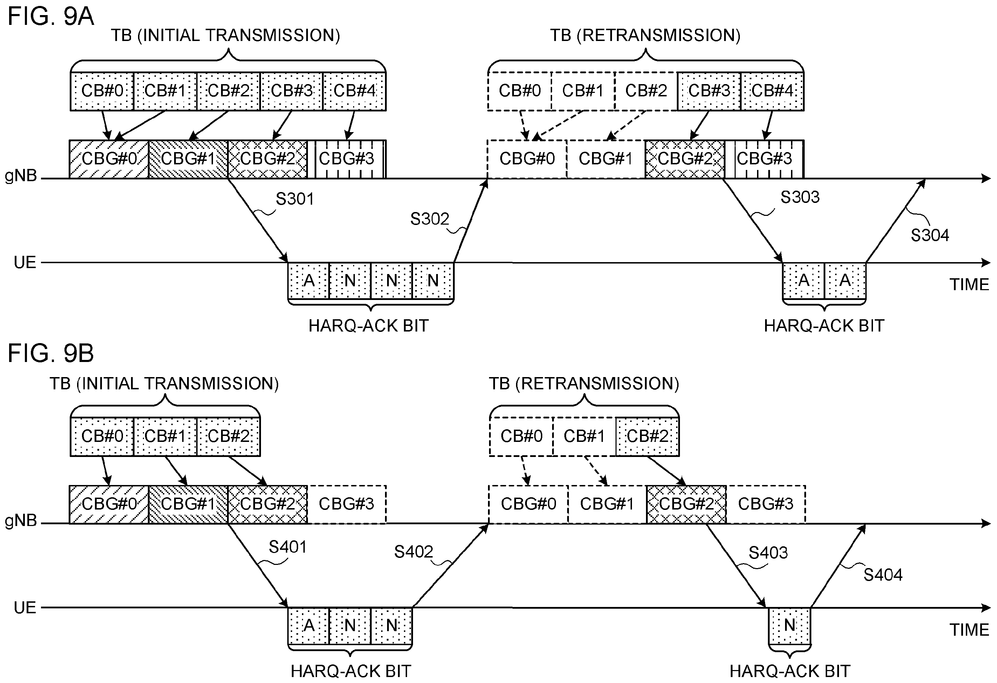

FIGs. 9 are diagrams to show examples of HARQ-ACK feedback according to the second example. FIG. 9A shows a case where the number of CBs per TB is greater than or equal to the maximum number of CBGs per TB. The preconditions in FIG. 9A are the same as the preconditions in FIG. 8A. Furthermore, steps S301 to S303 of FIG. 9A are the same as steps S101 to S103 of FIG. 8A. The following description will primarily focus on differences from FIG. 8A.

As shown in FIG. 9A, based on the decoding results of retransmitted CBs #3 and #4, which form retransmitted CBGs #2 and #3, respectively, the user terminal generates 2 HARQ-ACK bits, which represent an ACK or a NACK in response to these retransmitted CBGs #2 and #3, and transmits these HARQ-ACK bits by using the PUCCH or the PUSCH (step S304).

In FIG. 9A, the radio base station mistakes the NACK in response to CBG #1, transmitted from the user terminal in step S302, for an ACK (NACK-to-ACK error), and therefore does not retransmit CBG #1. When, as shown in FIG. 9A, HARQ-ACK bits representing only ACKs or NACKs in response to retransmitted CBGs are transmitted, although CBG #1 that causes a NACK-to-ACK error might be lost, the overhead due to HARQ-ACK bits can be nevertheless reduced.

FIG. 9B shows a case where the number of CBs per TB is less than the maximum number of CBGs per TB. The preconditions in FIG. 9B are the same as the preconditions in FIG. 8B. Furthermore, steps S401 to S403 of FIG. 9B are the same as steps S201 to S203 of FIG. 9B. The following description will primarily focus on differences from FIG. 8B.

As shown in FIG. 9B, based on the decoding results of retransmitted CB 2, which forms retransmitted CBG #2, the user terminal generates 1 HARQ-ACK bit, which represents an ACK or a NACK in response to this retransmitted CBG #2, and transmits this HARQ-ACK bit by using the PUCCH or the PUSCH (step S404). In FIG. 9B, although CBG #1 to cause a NACK-to-ACK error might be lost as in FIG. 9A, the overhead due to HARQ-ACK bits can nevertheless be reduced.

As described above, in the event of second HARQ-ACK feedback, when at least 1 CBG in a TB is subject to retransmission, HARQ-ACK bits to represent only ACKs/NACKs in response to these retransmitting CBGs are reported, so that the overhead due to HARQ-ACK bits can nevertheless be reduced.

### <Third HARQ-ACK Feedback>

Third HARQ-ACK feedback is different from the second HARQ-ACK feedback in that when at least 1 CBG in a TB is subject to retransmission, a user terminal transmits an HARQ-ACK bit to represent an ACK or a NACK in response to the TB as a whole, together with HARQ-ACK bits that represent ACKs or NACKs in response to the CBGs that are retransmitted. The following description will primarily focus on differences from the second HARQ-ACK feedback.

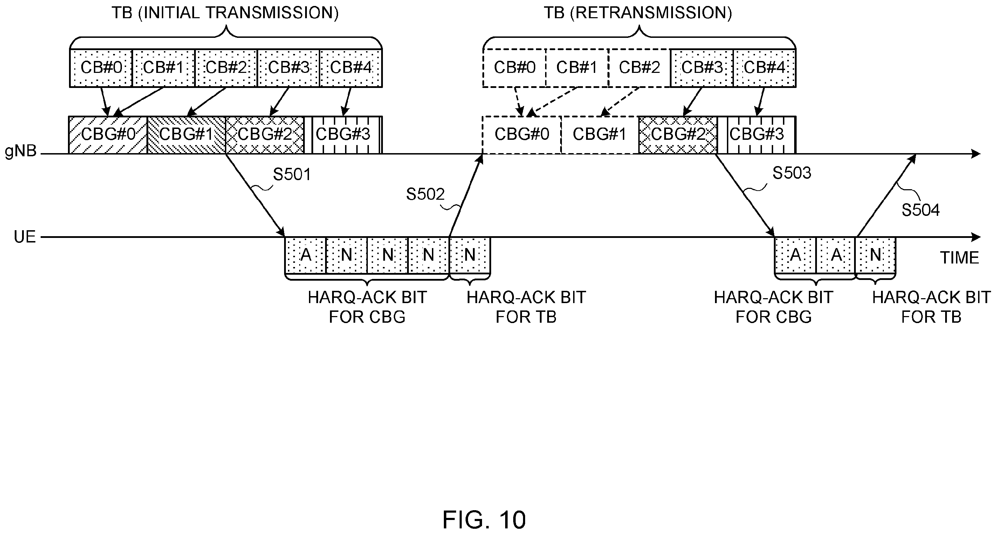

FIG. 10 is a diagram to show an example of third HARQ-ACK feedback according to the second example. The preconditions in FIG. 10 are the same as the preconditions in FIG. 8A and FIG. 9A. Furthermore, step S501 of FIG. 10 is the same as step S101 of FIG. 8A and FIG. 9A. The following description will primarily focus on differences from FIG. 8A and FIG. 9A.

As shown in FIG. 10, the user terminal may generate UCI that includes TB-level HARQ ACK bits, in addition to CBG-level HARQ-ACK bits, and transmit this UCI via the PUCCH or the PUSCH (steps S502 and S504).

Here, the user terminal may encode the TB-level HARQ-ACK bits and the CBG-level HARQ-ACK bits separately (separate coding), or combine and encode the TB-level HARQ-ACK bits and the CBG-level HARQ-ACK bits together (joint coding).

Also, the user terminal may transmit the TB-level HARQ-ACK bits and the CBG-level HARQ-ACK bits together by using the same resource, or transmit the TB-level HARQ-ACK bits and the CBG-level HARQ-ACK bits by using different resources.

Also, the user terminal may generate TB-level HARQ-ACK bits based on the decoding results that are given by using the CRC bits appended to TBs. Also, the user terminal may generate CBG-level HARQ-ACK bits based on the decoding results that are given by using the CRC bits appended to each CB in CBGs.

For example, in FIG. 10, the radio base station mistakes the NACK in response to CBG #1, transmitted as feedback from the user terminal in step S502, for an ACK (NACK-to-ACK error), and therefore retransmits CBGs #2 and #3, without retransmitting CBG #1. In this case, the user terminal generates 2 bits of CBG-level HARQ-ACK bits, which represent ACKs in response to retransmitted CBGs #2 and #3, based on the decoding results of retransmitted CBs #3 and #4, which form retransmitted CBGs #2 and #3, respectively.

Also, although the user terminal decodes the TB as a whole by using the CRC bits appended to the TB, the user terminal fails to decode the whole of the TB because CBG #1 is missing. Therefore, in FIG. 10, the user terminal transmits a TB-level HARQ-ACK bit representing a NACK in response to the TB as a whole, in addition to CBG-level HARQ-ACK bits representing ACKs in response to retransmitted CBGs #2 and #3. By this means, the radio base station can retransmit the entire TB.

As described above, according to the third HARQ-ACK feedback, TB-level HARQ-ACK bits are transmitted, in addition to CBG-level HARQ-ACK bits, so that fallback from CBG-based retransmission to TB-based retransmission is easy when NACK-to-ACK errors occur. Furthermore, CBGs where NACK-to-ACK errors occur can be prevented from missing.

### (Radio Communication System)

Now, the structure of a radio communication system according to the present embodiment will be described below. In this radio communication system, the radio communication methods according to the above-described embodiments are employed. Note that the radio communication method according to each embodiment described above may be used alone or may be used in combination.

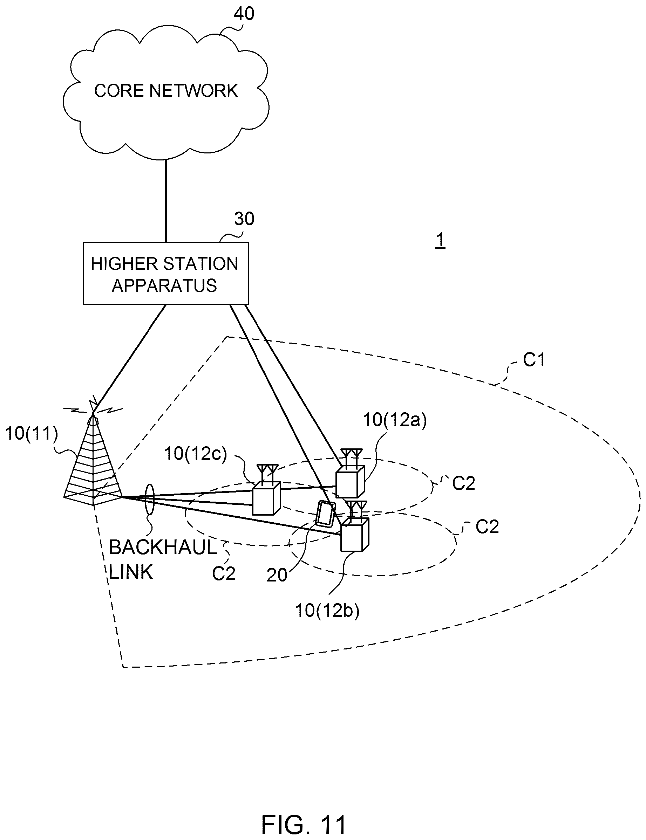

FIG. 11 is a diagram to show an exemplary schematic structure of a radio communication system according to the present embodiment. A radio communication system 1 can adopt carrier aggregation (CA), which groups a number of fundamental frequency blocks (component carriers (CCs)) into one, where an LTE system bandwidth (for example, 20 MHz) is used as 1 unit, and/or dual connectivity (DC). Note that the radio communication system 1 may be referred to as "SUPER 3G," "LTE-A (LTE-Advanced)," "IMT-Advanced," "4G," "5G," "FRA (Future Radio Access)," "NR (New RAT)" and so on.

The radio communication system 1 shown in FIG. 11 includes a radio base station 11 that forms a macro cell C1, and radio base stations 12a to 12c that are placed within the macro cell C1 and that form small cells C2, which are narrower than the macro cell C1. Also, user terminals 20 are placed in the macro cell C1 and in each small cell C2. A structure in which different numerologies are applied between cells may be adopted here. Note that a "numerology" refers to a set of communication parameters that characterize the design of signals in a given RAT.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, two or more CCs). Furthermore, the user terminals can use licensed-band CCs and unlicensed-band CCs as a plurality of cells.

Furthermore, the user terminals 20 can communicate based on time division duplexing (TDD) or frequency division duplexing (FDD) in each cell. A TDD cell and an FDD cell may be referred to as a "TDD carrier (frame structure type 2)" and an "FDD carrier (frame structure type 1)," respectively.

Also, in each cell (carrier), either subframes having a relatively long time length (for example, 1 ms) (also referred to as "TTIs," "normal TTIs," "long TTIs," "normal subframes," "long subframes," "slots," and/or the like), or subframes having a relatively short time length (also referred to as "short TTIs," "short subframes," "slots" and/or the like) may be applied, or both long subframes and short subframe may be used. Furthermore, in each cell, subframes of two or more time lengths may be used.

Between the user terminals 20 and the radio base station 11, communication can be carried out using a carrier of a relatively low frequency band (for example, 2 GHz) and a narrow bandwidth (referred to as, for example, an "existing carrier," a "legacy carrier," and/or the like). Meanwhile, between the user terminals 20 and the radio base stations 12, a carrier of a relatively high frequency band (for example, 3.5GHz, 5GHz, 30 to 70 GHz and so on) and a wide bandwidth may be used, or the same carrier as that used in the radio base station 11 may be used. Note that the structure of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between 2 radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals. Furthermore, the user terminals 20 can perform device-to-device (D2D) communication with other user terminals 20.

In the radio communication system 1, as radio access schemes, OFDMA (orthogonal Frequency Division Multiple Access) can be applied to the downlink (DL), and SC-FDMA (Single-Carrier Frequency Division Multiple Access) can be applied to the uplink (UL). OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combination of these, and OFDMA may be used in the UL. Also, SC-FDMA can be applied to a side link (SL) that is used in inter-terminal communication.

DL channels that are used in radio communication system 1 include DL data channel that is shared by each user terminal 20 (also referred to as "PDSCH (Physical Downlink Shared CHannel)," "DL shared channel" and so forth), a broadcast channel (PBCH (Physical Broadcast CHannel)), L1/L2 control channels and so on. At least one of user data, higher layer control information, SIBs (System Information Blocks) and so forth is communicated in the PDSCH. Also, the MIB (Master Information Block) is communicated in the PBCH.

The L1/L2 control channels include DL control channels (such as PDCCH (Physical Downlink Control CHannel), EPDCCH (Enhanced Physical Downlink Control CHannel), etc.), PCFICH (Physical Control Format Indicator CHannel), PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. The EPDCCH is frequency-division-multiplexed with the PDSCH and used to communicate DCI and so on, like the PDCCH. PUSCH retransmission control information (also referred to as "A/N," "HARQ-ACK," "HARQ-ACK bit," "A/N code book" and so on) can be communicated using at least one of the PHICH, the PDCCH and the EPDCCH.

UL channels that are used in the radio communication system 1 include UL data channel that is shared by each user terminal 20 (also referred to as "PUSCH (Physical Uplink Shared CHannel)," "UL shared channel" and/or the like), a UL control channel (PUCCH (Physical Uplink Control CHannel)), a random access channel (PRACH (Physical Random Access CHannel)) and so on. User data, higher layer control information and so on are communicated by the PUSCH. Uplink control information (UCI), including at least one of retransmission control information (for example, A/N, HARQ-ACK) for the PDSCH, channel state information (CSI) and so on is communicated in the PUSCH or the PUCCH. By means of the PRACH, random access preambles for establishing connections with cells are communicated.

### (Radio Base Station)

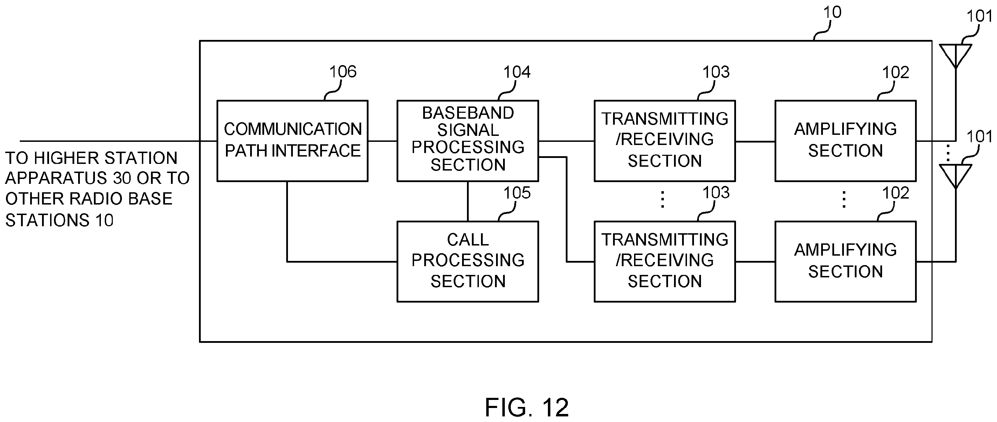

FIG. 12 is a diagram to show an exemplary overall structure of a radio base station according to the present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) process), scheduling, transport format selection, channel coding, rate matching, scrambling, an inverse fast Fourier transform (IFFT) process and a precoding process, and the result is forwarded to each transmitting/receiving sections 103. Furthermore, downlink control signals are also subjected to transmission processes such as channel coding and an inverse fast Fourier transform, and forwarded to the transmitting/receiving sections 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

A transmitting/receiving section 103 can be constituted by a transmitters/receiver, a transmitting/receiving circuit or transmitting/receiving apparatus that can be described based on general understanding of the technical field to which the present invention pertains. Note that a transmitting/receiving section 103 may be designed as a transmitting/receiving section in one entity, or may be constituted by a transmitting section and a receiving section.

Meanwhile, as for UL signals, radio frequency signals that are received in the transmitting/receiving antennas 101 are amplified in the amplifying sections 102. The transmitting/receiving sections 103 receive the UL signals amplified in the amplifying sections 102. The received signals are converted into the baseband signal through frequency conversion in the transmitting/receiving sections 103 and output to the baseband signal processing section 104.

In the baseband signal processing section 104, UL data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 at least performs call processing such as setting up and releasing communication channels, manages the state of the radio base station 10 or manages the radio resources.

The communication path interface section 106 transmits and receives signals to and from the higher station apparatus 30 via a predetermined interface. Also, the communication path interface 106 may transmit and receive signals (backhaul signaling) with neighboring radio base stations 10 via an inter-base station interface (which is, for example, optical fiber in compliance with the CPRI (Common Public Radio Interface), the X2 interface, etc.).

In addition, the transmitting/receiving sections 103 transmit DL signals (for example, at least one of DCI (DL assignment for scheduling DL data and/or UL grant for scheduling UL data), DL data and DL reference signals), and receive UL signals (for example, at least one of UL data, UCI, and UL reference signals).

In addition, the transmitting/receiving sections 103 receive retransmission control information (also referred to as "ACK/NACK," "A/N," "HARQ-ACK," "A/N code block," etc.) related to DL signals. As to how often the retransmission control information is transmitted, for example, the retransmission control information may be transmitted per CB, per CBG, per TB or for every one or more TBs (that is, ACKs or NACKs may be indicated per CB, per CBG, per TB or for every one or more TBs). In addition, the transmitting/receiving sections 103 may transmit configuration information for the unit for retransmission of DL signals and/or UL signals.

Also, the transmitting/receiving sections 103 may transmit information to indicate the number of CBGs per TB (CBG quantity information), and/or information to indicate the number of CBs per CBG (CB information), by higher layer signaling.

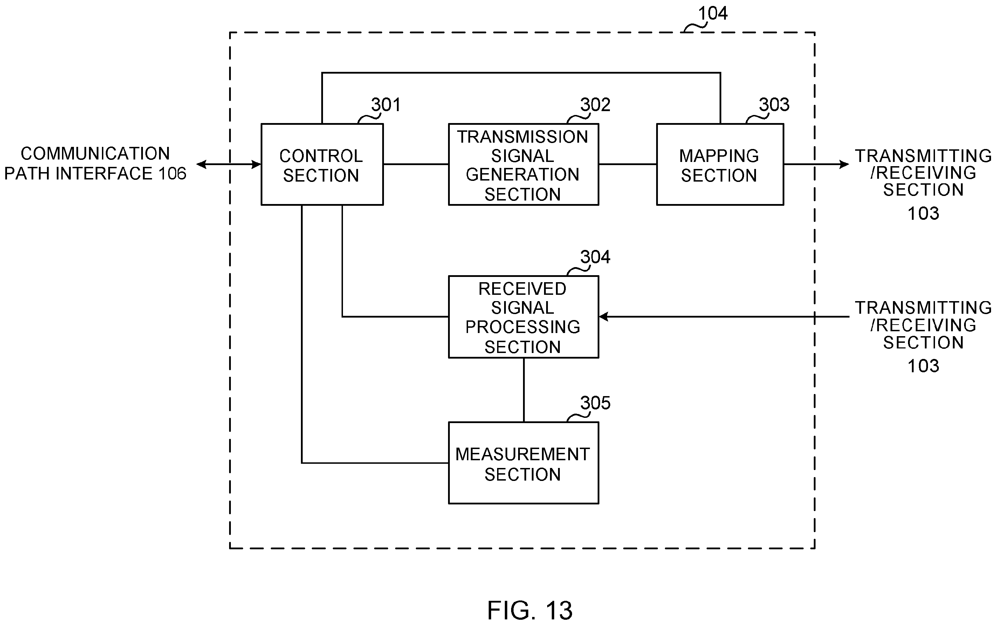

FIG. 13 is a diagram to show an exemplary functional structure of a radio base station according to the present embodiment. Note that, although FIG. 13 primarily shows functional blocks that pertain to characteristic parts of the present embodiment, the radio base station 10 has other functional blocks that are necessary for radio communication as well. As shown in FIG. 13, the baseband signal processing section 104 has a control section 301, a transmission signal generation section 302, a mapping section 303, a received signal processing section 304 and a measurement section 305.

The control section 301 controls the whole of the radio base station 10. The control section 301 controls, for example, at least one of generation of downlink signals in the transmission signal generation section 302, mapping of downlink signals in the mapping section 303, the receiving process (for example, demodulation) of uplink signals in the received signal processing section 304, and measurements in the measurement section 305.

To be more specific, the control section 301 selects the modulation scheme and/or the TBS for DL signals based on channel quality indicators (CQI) fed back from the user terminal 20. The control section 301 controls the transmission signal generation section 302 to encode DL signals based on the TBS and modulate DL signals based on the modulation scheme.

Also, when the TBS exceeds a predetermined threshold, the control section 301 may apply code block segmentation to DL signals, whereby a TBS is divided into multiple CBs. When code block segmentation is applied to DL signals, the control section 301 may select one or more CBs to form each CBG based on the maximum number of CBGs per TB (see the first example, the first CBG configuration, FIGs. 4 and FIGs. 5). Alternatively, the control section 301 may select one or more CBs to form each CBG based on the maximum number of CBs per CBG (see the first example, the second CBG configuration and FIGs. 6). The control section 301 may also control the mapping of each CBG to time/frequency resources (see the first example, mapping to time/frequency resources and FIGs. 7).

Furthermore, the control section 301 controls UL signal receiving processes (for example, demodulation, decoding, etc.). For example, the control section 301 demodulates UL signals based on the modulation scheme indicated by the MCS index designated in DCI (UL grant), and determines the TBS based on the TBS index indicated by the MCS index and the number of resource blocks to be allocated. The control section 301 determines the number of CBs and the size of each CB in the TB based on the TBS determined this way of the UL data.

Also, the control section 301 may select one or more CBs to form each CBG based on the maximum number of CBGs per UL TB (see the first example, the first CBG configuration and FIGs. 4 and 5). Alternatively, the control section 301 may select one or more CBs to form each CBG, based on the maximum number of CBs per UL CBG (see the first example, the second CBG configuration and FIGs. 6).

Furthermore, the control section 301 may control retransmission per CBG (or per TB) based on retransmission control information that indicate an ACK or a NACK in response to each CBG (or each TB), from the user terminal 20.

The control section 301 can be constituted by a controller, a control circuit or control apparatus that can be described based on general understanding of the technical field to which the present invention pertains.

The transmission signal generation section 302 may generate a DL signal (including at least one of DL data, DCI, a DL reference signal and control information that is provided by way of higher layer signaling) based on commands from the control section 301, and output this signal to the mapping section 303.

The transmission signal generation section 302 can be constituted by a signal generator, a signal generating circuit or signal generating apparatus that can be described based on general understanding of the technical field to which the present invention pertains.

The mapping section 303 maps the DL signal generated in the transmission signal generation section 302 to a radio resource, as commanded from the control section 301, and outputs this to the transmitting/receiving sections 203. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding, etc.) for UL signals transmitted from the user terminal 20. For example, the received signal processing section 304 may perform the decoding process in units of CBs based on commands from the control section 301.

The received signal processing section 304 performs receiving processes (for example, demapping, demodulation, decoding, etc.) of UL signals transmitted from the user terminals 20 (including, for example, a UL data signal, a UL control signal, a UL reference signal, etc.). To be more specific, the received signal processing section 304 may output the received signals, the signals after the receiving processes and so on, to the measurement section 305. In addition, the received signal processing section 304 performs UCI receiving processes based on UL control channel configuration commanded from the control section 301.

Also, the measurement section 305 may measure the channel quality in UL based on, for example, the received power (for example, RSRP (Reference Signal Received Power)) and/or the received quality (for example, RSRQ (Reference Signal Received Quality)) of UL reference signals. The measurement results may be output to the control section 301.

### (User Terminal)

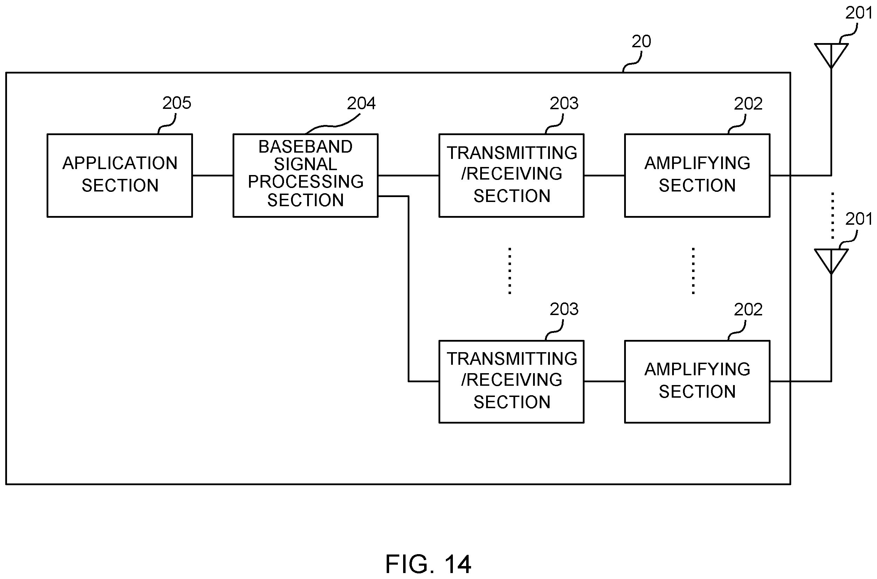

FIG. 14 is a diagram to show an exemplary overall structure of a user terminal according to the present embodiment. A user terminal 20 has a plurality of transmitting/receiving antennas 201 for MIMO communication, amplifying sections 202, transmitting/receiving sections 203, a baseband signal processing section 204 and an application section 205.

Radio frequency signals that are received in multiple transmitting/receiving antennas 201 are amplified in the amplifying sections 202. The transmitting/receiving sections 203 receive DL signals amplified in the amplifying sections 202. The received signals are subjected to frequency conversion and converted into the baseband signal in the transmitting/receiving sections 203, and output to the baseband signal processing section 204.

The baseband signal processing section 204 performs, for the baseband signal that is input, at least one of an FFT process, error correction decoding, a retransmission control receiving process and so on. The DL data is forwarded to the application section 205. The application section 205 performs processes related to higher layers above the physical layer and the MAC layer, and so on.

Meanwhile, UL data is input from the application section 205 to the baseband signal processing section 204. The baseband signal processing section 204 performs a retransmission control transmission process (for example, an HARQ transmission process), channel coding, rate matching, puncturing, a discrete Fourier transform (DFT) process, an IFFT process and so on, and the result is forwarded to each transmitting/receiving sections 203. UCI (including, for example, at least one of an A/N in response to a DL signal, channel state information (CSI) and a scheduling request (SR), and/or others) is also subjected to at least one of channel coding, rate matching, puncturing, a DFT process, an IFFT process and so on, and the result is forwarded to the transmitting/receiving sections 203.

Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

In addition, the transmitting/receiving section sections 203 receive DL signals (for example, at least one of DCI (DL assignment and/or UL grant), DL data and DL reference signals), and transmit UL signals (for example, at least one of UL data, UCI, and UL reference signals).

In addition, the transmitting/receiving sections 203 transmit retransmission control information related to DL signals. As to how often the retransmission control information is transmitted, for example, the retransmission control information may be transmitted per CB, per CBG, per TB or for every one or more TBs (that is, ACKs or NACKs may be indicated per CB, per CBG, per TB or for every one or more TBs). In addition, the transmitting/receiving sections 203 may receive configuration information for the unit for retransmission of DL signals and/or UL signals.

Also, the transmitting/receiving sections 203 may transmit CBG quantity information, which indicates the number of CBGs per TB, and/or CB information, which indicates the number of CBs per CBG, by higher layer signaling.

A transmitting/receiving section 203 can be constituted by a transmitter/receiver, a transmitting/receiving circuit or transmitting/receiving apparatus that can be described based on general understanding of the technical field to which the present invention pertains. Furthermore, a transmitting/receiving section 203 may be structured as one transmitting/receiving section, or may be formed with a transmitting section and a receiving section.

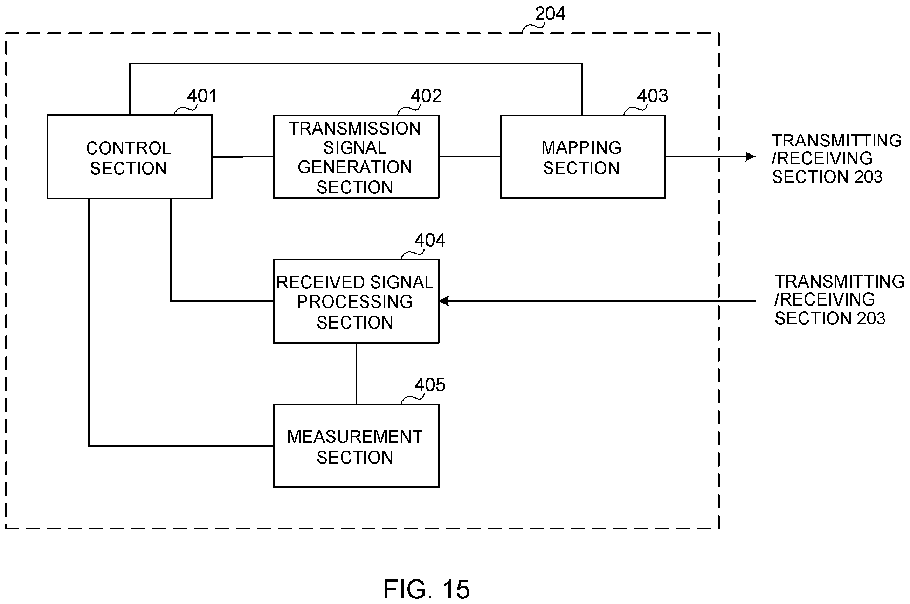

FIG. 15 is a diagram to show an exemplary functional structure of a user terminal according to the present embodiment. Note that, although FIG. 15 primarily shows functional blocks that pertain to characteristic parts of the present embodiment, the user terminal 20 has other functional blocks that are necessary for radio communication as well. As shown in FIG. 15, the baseband signal processing section 204 provided in the user terminal 20 has a control section 401, a transmission signal generation section 402, a mapping section 403, a received signal processing section 404 and a measurement section 405.

The control section 401 controls the whole of the user terminal 20. The control section 401 controls, for example, at least one of generation of UL signals in the transmission signal generation section 402, mapping of UL signals in the mapping section 403, the receiving process of DL signals in the received signal processing section 404 and measurements in the measurement section 405.

To be more specific, the control section 401 controls DL signal receiving processes (for example, demodulation, decoding, etc.) based on DCI (DL assignment). For example, the control section 401 may control the received signal processing section 404 to demodulate DL signals based on the modulation scheme indicated by the MCS index designated in DCI. Also, the control section 401 determines the TBS based on the TBS index indicated by the MCS index and the number of allocated resource blocks. The control section 401 determines the number of CBs and the size of each CB in the TB based on the TBS determined this way for DL data.

Alternatively, the control section 401 may select one or more CBs to form each CBG based on the maximum number of CBGs per DL TB (see the first example, the first CBG configuration and FIGs. 4 and 5). Alternatively, the control section 401 may select one or more CBs to form each CBG based on the maximum number of CBs per DL CBG (see the first example, the second CBG configuration and FIGs. 6).

Also, the control section 401 may control generation and/or transmission of retransmission control information related to DL data. To be more specific, the control section 401 may control generation and/or transmission of retransmission control information that indicates ACKs or NACKs per predetermined unit (for example, per CB or per CBG). To be more specific, the control section 401 may control the generation of retransmission control information that indicates ACKs/NACKs in response to each CBG and/or TB, based on the demodulation and/or decoding (error correction) result of each CB (second example).

For example, when at least 1 CBG in a TB is subject to retransmission, the control section 401 may determine the number of bits of retransmission control information based on the maximum number of CBGs in the TB. The control section 401 may also control the transmission of retransmission control information representing ACKs or NACKs in response to all CBGs in the TB (see the second example, the first HARQ-ACK feedback and FIGs. 8).

Alternatively, when at least 1 CBG in a TB is subject to retransmission, the control section 401 may determine the number of bits of retransmission control information based on the number of CBGs that are retransmitted. The control section 401 may also control the transmission of retransmission control information representing ACKs or NACKs in response to retransmitted CBGs (see the second example, the second HARQ-ACK feedback and FIGs. 9). The control section 401 may also control the transmission of retransmission control information representing ACKs or NACKs in response to retransmitted CBGs and an ACK or A NACK in response to the whole TB (see the second example, the third HARQ-ACK feedback and FIG. 10).

Also, the control section 401 may control restoration of TBs constituting DL signals. To be more specific, the control section 401 may control TBs to be restored based on CBs or CBGs that are initially transmitted, and/or retransmitted CBs/CBGs.

The control section 401 may also control receiving processes for retransmitting CBGs based on information related to retransmitting CBGs contained in DCI (DL assignment). For example, the control section 401 may control the process of combining data stored in the user terminal 20 (its soft buffer) and a retransmitting CBG based on the CBG index of the retransmitting CBG, included in DCI.

Also, the control section 401 controls the generation and transmission processes (for example, encoding, modulation, mapping etc.) of UL signals based on DCI (UL grant). For example, the control section 401 may control the transmission signal generation section 402 to modulate UL signals based on the modulation scheme that is indicated by the MCS index in DCI. Also, the control section 401 may control the transmission signal generation section 402 to determine the TBS based on the TBS index, which is indicated by the MCS index, and the number of resource blocks to allocate, and encode UL signals based on this TBS.

Also, when TBS exceeds a predetermined threshold, the control section 401 may apply code block segmentation, whereby a TBS is divided into multiple CBs, to UL signals. When code block segmentation is applied to UL signals, the control section 401 may select one or more CBs to form each CBG based on the maximum number of CBGs per TB (see the first example, the first CBG configuration, FIGs. 4 and FIGs. 5). Alternatively, the control section 401 may select one or more CBs to form each CBG based on the maximum number of CBs per CBG (see the first example, the second CBG configuration and FIGs. 6). The control section 401 may also control the mapping of each CBG to time/frequency resources (see the first example, mapping to time/frequency resources and FIGs. 7).

The control section 401 can be constituted by a controller, a control circuit or control apparatus that can be described based on general understanding of the technical field to which the present invention pertains.

The transmission signal generation section 402 generates retransmission control information for UL signals and DL signals as commanded from the control section 401 (including performing encoding, rate matching, puncturing, modulation and/or other processes), and outputs this to the mapping section 403. The transmission signal generation section 402 can be constituted by a signal generator, a signal generating circuit or signal generating apparatus that can be described based on general understanding of the technical field to which the present invention pertains.

The mapping section 403 maps the retransmission control information for UL signals and DL signals generated in the transmission signal generation section 402 to radio resources, as commanded from the control section 401, and outputs these to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes for DL signals (for example, demapping, demodulation, decoding, etc.). For example, the received signal processing section 404 may perform the decoding process on a per CB basis as commanded from the control section 401, and output the decoding result of each CB to the control section 401.

The received signal processing section 404 outputs the information received from the radio base station 10, to the control section 401. The received signal processing section 404 outputs, for example, broadcast information, system information, higher layer control information by higher layer signaling such as RRC signaling, L1/L2 control information (for example, UL grant, DL assignment, etc.) and so on to the control section 401.

The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The measurement section 405 measures channel states based on reference signals (for example, CSI-RS) from the radio base station 10, and outputs the measurement results to the control section 401. Note that channel state measurements may be conducted per CC.

The measurement section 405 can be constituted by a signal processor, a signal processing circuit or signal processing apparatus, and a measurer, a measurement circuit or measurement apparatus that can be described based on general understanding of the technical field to which the present invention pertains.

### (Hardware Structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these multiple pieces of apparatus.

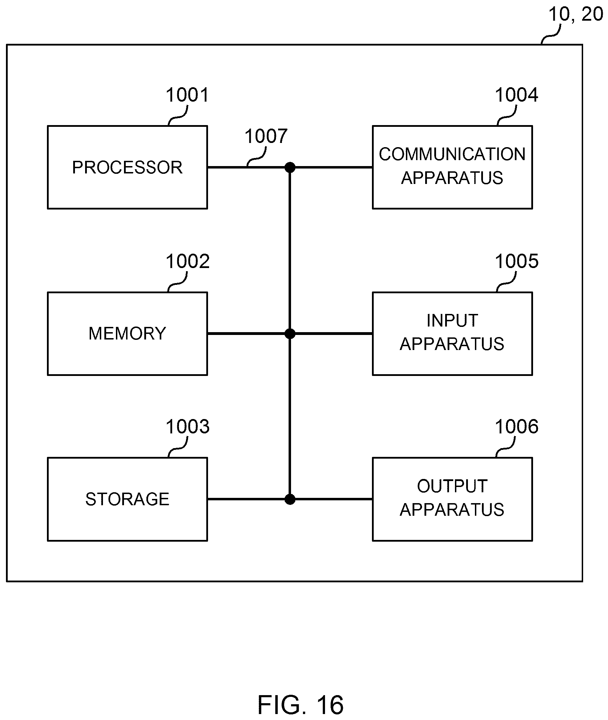

For example, the radio base station, user terminals and so on according to the present embodiment mode may function as a computer that executes the processes of the radio communication method of the present invention. FIG. 16 is a diagram to show an exemplary hardware structure of a radio base station and a user terminal according to the present embodiment. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only 1 processor 1001 is shown, a plurality of processors may be provided. Furthermore, processes may be implemented with 1 processor, or processes may be implemented in sequence, or in different manners, on one or more processors. Note that the processor 1001 may be implemented with one or more chips.

The functions of the radio base station 10 and the user terminal 20 are implemented by allowing hardware such as the processor 1001 and the memory 1002 to read predetermined software (programs), thereby allowing the processor 1001 to do calculations, the communication apparatus 1004 to communicate, and the memory 1002 and the storage 1003 to read and write data.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and others may be implemented by the processor 1001.

Furthermore, the processor 1001 reads programs (program codes), software modules, data and so forth from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory (primary storage apparatus)" and so on. The memory 1002 can store executable programs (program codes), software modules and so on for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Also, each device shown in FIG. 16 is connected by a bus 1007 for communicating information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals" (or "signaling"). Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be formed with one or more periods (frames) in the time domain. Each of one or more periods (frames) constituting a radio frame may be referred to as a "subframe." Furthermore, a subframe may be formed with one or more slots in the time domain. A subframe may be a fixed time length (for example, 1 ms) not dependent on the numerology.

A slot may be formed with one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology. Also, a slot may include a plurality of minislots. Each minislot may be formed with one or more symbols in the time domain.

A radio frame, a subframe, a slot, a minislot and a symbol all represent the time unit in signal communication. A radio frame, a subframe, a slot, a minislot and a symbol may be each called by other applicable names. For example, 1 subframe may be referred to as a "transmission time interval (TTI)," or a plurality of consecutive subframes may be referred to as a "TTI," or 1 slot or mini-slot may be referred to as a "TTI." That is, a subframe and/or a TTI may be a subframe (1 ms) in existing LTE, may be a shorter period than 1 ms (for example, 1 to 13 symbols), or may be a longer period of time than 1 ms.

Here, a TTI refers to the minimum time unit of scheduling in radio communication, for example. For example, in LTE systems, a radio base station schedules the radio resources (such as the frequency bandwidth and/or transmission power that can be used in each user terminal) to allocate to each user terminal in TTI units. Note that the definition of TTIs is not limited to this. The TTI may be the transmission time unit of channel-encoded data packets (transport blocks), code blocks and/or codewords, or may be the unit of processing in scheduling, link adaptation and so on. Note that, when 1 slot or 1 minislot is referred to as a "TTI," one or more TTIs (that is, one or multiple slots or one or more minislots) may be the minimum time unit of scheduling. Also, the number of slots (the number of minislots) to constitute this minimum time unit of scheduling may be controlled.

A TTI having a time length of 1 ms may be referred to as a "normal TTI (TTI in LTE Rel. 8 to 12)," a "long TTI," a "normal subframe," a "long subframe," and so on. A TTI that is shorter than a normal TTI may be referred to as a "shortened TTI," a "short TTI," a "partial TTI" (or a "fractional TTI"), a "shortened subframe," a "short subframe," and so on.

A resource block (RB) is the unit of resource allocation in the time domain and the frequency domain, and may include one or a plurality of consecutive subcarriers in the frequency domain. Also, an RB may include one or more symbols in the time domain, and may be 1 slot, 1 minislot, 1 subframe or 1 TTI in length. 1 TTI and 1 subframe each may be formed with one or more resource blocks. Note that an RB may be referred to as a "physical resource block (PRB (Physical RB))," a "PRB pair," an "RB pair," and so on.

Furthermore, a resource block may be formed with one or more resource elements (REs). For example, 1 RE may be a radio resource field of 1 subcarrier and 1 symbol.

Note that the structures of radio frames, subframes, slots, minislots, symbols and so on described above are merely examples. For example, configurations pertaining to the number of subframes included in a radio frame, the number of slots included in a subframe or a radio frame, the number of mini-slots included in a slot, the number of symbols included in a slot or a mini-slot, the number of subcarriers included in an RB, the number of symbols in a TTI, the duration of symbols, the duration of cyclic prefixes (CPs) and so on can be changed in a variety of ways.

Also, the information and parameters described in this specification may be represented in absolute values or in relative values with respect to predetermined values, or may be represented in other information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and/or output via a plurality of network nodes.

The information, signals and so on that are input and/or output may be stored in a specific location (for example, a memory), or may be managed using a management table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (by, for example, not reporting this piece of information, or by reporting a different piece of information).

Decisions may be made in values represented by 1 bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, 3) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may also be referred to as, for example, a "subscriber station," a "mobile unit," a "subscriber unit," a "wireless unit," a "remote unit," a "mobile device," a "wireless device," a "wireless communication device," a "remote device," a "mobile subscriber station," an "access terminal," a "mobile terminal," a "wireless terminal," a "remote terminal," a "handset," a "user agent," a "mobile client," a "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, user terminals 20 may have the functions of the radio base stations 10 described above. In addition, "uplink" and/or "downlink" may be interpreted as "sides." For example, an "uplink channel" may be interpreted as a "side channel."

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by higher nodes (upper nodes). In a network formed with one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The examples/embodiments illustrated in this specification may be used individually or in combinations, which may be switched depending on the mode of implementation. The order of processes, sequences, flowcharts and so on that have been used to describe the examples/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark) and other adequate radio communication methods, and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used herein only for convenience, as a method of distinguishing between two or more elements. In this way, reference to the first and second elements does not imply that only 2 elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between 2 elements that are "connected" or "coupled" to each other. The coupling or connection between the elements may be physical, logical or a combination thereof. As used herein, 2 elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in radio frequency fields, microwave regions and optical (both visible and invisible) regions.

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the scope of the present invention defined by the recitations of claims. Consequently, the description herein is provided only for the purpose of explaining examples, and should by no means be construed to limit the present invention in any way.

## Claims

1. A terminal (20) comprising:
a receiving section (203) configured to receive information about a maximum number of code block groups, CBGs included in a transport block, TB, by higher layer signaling; and
a control section (401) configured to determine code blocks, CBs, that constitute each CBG based on a number of CBs in the TB and the maximum number of CBGs,
wherein, when the number of CBs in the TB is greater than or equal to the maximum number of CBGs, the control section (401) determines the CBs that constitute the CBG based on a value that is obtained by applying a floor function to the number of CBs in the TB divided by the maximum number of CBGs.

2. The terminal (20) according to claim 1, wherein, when the number of CBs in the TB is less than the maximum number of CBGs, the control section (401) controls to transmit a NACK for an unused CBG.

3. The terminal (20) according to claim 1, wherein when retransmitting at least one CBG in the TB, the control section (401) controls ACK transmission for all CBGs that succeeded in decoding and NACK transmission for all CBGs that have failed the decoding before retransmission.

4. A radio communication method for a terminal (20) comprising the steps of:
receiving information about a maximum number of code block groups, CBGs, included in a transport block, TB, by higher layer signaling; and
determining code blocks, CBs, that constitute each CBG based on a number of CBs in the TB and the maximum number of CBGs,
wherein, when the number of CBs in the TB is greater than or equal to the maximum number of CBGs, determining the CBs that constitute the CBG based on a value that is obtained by applying a floor function to the number of CBs in the TB divided by the maximum number of CBGs.

5. A base station (10) comprising:
a transmitting section (103) configured to transmit information about a maximum number of code block groups, CBGs, included in a transport block, TB, by higher layer signaling; and
a control section (301) configured to control scheduling of a downlink shared channel including code blocks, CBs, that constitute each CBG that are determined based on a number of CBs in the TB and the maximum number of CBGs,
wherein, when the number of CBs in the TB is greater than or equal to the maximum number of CBGs, the CBs that constitute the CBG are determined based on a value that is obtained by applying a floor function to the number of CBs in the TB divided by the maximum number of CBGs.

6. A system (1) comprising a terminal (20) according to any one of claims 1 - 3 and a base station (10) according to claim 5.

## Patentansprüche

1. Endgerät (20), umfassend:
einen Empfangsabschnitt (203), der ausgebildet ist, um Informationen über eine maximale Anzahl von Codeblockgruppen, CBGs, die in einem Transportblock, TB, enthalten sind, durch Signalisierung auf höherer Ebene zu empfangen; und
einen Steuerabschnitt (401), der ausgebildet ist, um Codeblöcke, CBs, zu bestimmen, die die jeweilige CBG bilden, basierend auf einer Anzahl von CBs im TB und der maximalen Anzahl von CBGs,
wobei, wenn die Anzahl der CBs im TB größer als oder gleich der maximalen Anzahl von CBGs ist, der Steuerabschnitt (401) die CBs, die die CBG bilden, basierend auf einem Wert, der durch Anwenden der Bodenfunktion auf den Quotienten aus der Anzahl der CBs im TB und der maximalen Anzahl von CBGs erhalten wird, bestimmt.

2. Endgerät (20) nach Anspruch 1, wobei, wenn die Anzahl der CBs im TB kleiner als die maximale Anzahl von CBGs ist, der Steuerabschnitt (401) die Übertragung eines NACK für eine ungenutzte CBG regelt.

3. Endgerät (20) nach Anspruch 1, wobei, wenn mindestens eine CBG im TB erneut übertragen wird, der Steuerabschnitt (401) die Übertragung eines ACK für alle CBGs, deren Decodierung erfolgreich war, und die Übertragung eines NACK für alle CBGs, deren Decodierung vor der erneuten Übertragung fehlgeschlagen war, regelt.

4. Verfahren zur Funkkommunikation für ein Endgerät (20), umfassend die Schritte:
Empfangen von Informationen über eine maximale Anzahl von Codeblockgruppen, CBGs, die in einem Transportblock,TB, enthalten sind, durch Signalisierung auf höherer Ebene; und
Bestimmen von Codeblöcken, CBs, die die jeweilige CBG bilden, basierend auf einer Anzahl von CBs im TB und der maximalen Anzahl von CBGs,
wobei, wenn die Anzahl der CBs im TB größer als oder gleich der maximalen Anzahl von CBGs ist, die CBs, die die CBG bilden, basierend auf einem Wert, der durch Anwenden der Bodenfunktion auf den Quotienten aus der Anzahl der CBs im TB und der maximalen Anzahl von CBGs erhalten wird, bestimmt werden.

5. Basisstation (10), umfassend:
einen Übertragungsabschnitt (103), der ausgebildet ist, um Informationen über eine maximale Anzahl von Codeblockgruppen, CBGs, die in einem Transportblock,TB, enthalten sind, durch Signalisierung auf höherer Ebene zu übertragen; und
einen Steuerabschnitt (301), der ausgebildet ist, um die Einplanung eines gemeinsam genutzten Downlink-Kanals zu regeln, einschließend Codeblöcke, CBs, die die jeweiligen CBGs bilden, die basierend auf einer Anzahl von CBs im TB und der maximalen Anzahl von CBGs bestimmt werden,
wobei, wenn die Anzahl der CBs im TB größer als oder gleich der maximalen Anzahl von CBGs ist, die CBs, die die CBG bilden, basierend auf einem Wert, der durch Anwenden der Bodenfunktion auf den Quotienten aus der Anzahl der CBs im TB und der maximalen Anzahl von CBGs erhalten wird, bestimmt werden.

6. System (1), umfassend ein Endgerät (20) nach einem der Ansprüche 1-3 und eine Basisstation (10) nach Anspruch 5.

## Revendications

1. Terminal (20) comprenant :
une section de réception (203) configurée pour recevoir des informations relatives à un nombre maximal de groupes de blocs de code, CBG, inclus dans un bloc de transport, TB, par une signalisation de couche supérieure ; et
une section de commande (401) configurée pour déterminer des blocs de code, CB, qui constituent chaque CBG sur la base d'un nombre de CB dans le TB et du nombre maximal de CBG,
dans lequel, lorsque le nombre de CB dans le TB est supérieur ou égal au nombre maximal de CBG, la section de commande (401) détermine les CB qui constituent le CBG sur la base d'une valeur qui est obtenue en appliquant une fonction partie entière au nombre de CB dans le TB divisé par le nombre maximal de CBG.

2. Terminal (20) selon la revendication 1, dans lequel, lorsque le nombre de CB dans le TB est inférieur au nombre maximal de CBG, la section de commande (401) commande une transmission d'un NACK pour un CBG inutilisé.

3. Terminal (20) selon la revendication 1, dans lequel, lors d'une retransmission d'au moins un CBG dans le TB, la section de commande (401) commande une transmission d'un ACK pour tous les CBG dont le décodage a réussi et une transmission d'un NACK pour tous les CBG dont le décodage a échoué avant la retransmission.

4. Procédé de communication radio pour un terminal (20), comprenant les étapes de :
réception, par une signalisation de couche supérieure, des informations relatives à un nombre maximal de groupes de blocs de code, CBG, inclus dans un bloc de transport, TB ; et
détermination des blocs de code, CB, qui constituent chaque CBG sur la base d'un nombre de CB dans le TB et du nombre maximal de CBG,
dans lequel, lorsque le nombre de CB dans le TB est supérieur ou égal au nombre maximal de CBG, une détermination des CB qui constituent le CBG sur la base d'une valeur qui est obtenue en appliquant une fonction partie entière au nombre de CB dans le TB divisé par le nombre maximal de CBG.

5. Station de base (10) comprenant :
une section de transmission (103) configurée pour transmettre, par une signalisation de couche supérieure, des informations relatives à un nombre maximal de groupes de blocs de code, CBG, inclus dans un bloc de transport, TB ; et
une section de commande (301) configurée pour commander une programmation d'un canal partagé de liaison descendante incluant des blocs de code, CB, qui constituent chaque CBG, lesquels sont déterminés sur la base d'un nombre de CB dans le TB et du nombre maximal de CBG,
dans laquelle, lorsque le nombre de CB dans le TB est supérieur ou égal au nombre maximal de CBG, les CB qui constituent le CBG sont déterminés sur la base d'une valeur qui est obtenue en appliquant une fonction partie entière au nombre de CB dans le TB divisé par le nombre maximal de CBG.

6. Système (1) comprenant un terminal (20) selon l'une quelconque des revendications 1 à 3 et une station de base (10) selon la revendication 5.
